# EUROPEAN PATENT SPECIFICATION

(11) **EP 3 734 171 B1**
(45) Date of publication and mention of the grant of the patent: **28.05.2025**
(21) Application number: 19798517.9
(22) Date of filing: 25.10.2019
(51) Int. Cl.: F24F 1/0007, F24F 13/00, F24F 13/24, F24F 13/22, F24F 13/20, F24F 1/0035

(54) **AIR CONDITIONING INDOOR UNIT AND AIR CONDITIONER**
KLIMAANLAGENINNENRAUMEINHEIT UND KLIMAANLAGE
UNITÉ INTÉRIEURE DE CLIMATISATION ET CLIMATISEUR

(30) Priority: 03.03.2019 CN 201920267897 U
(43) Date of publication of application: 04.11.2020
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: LV, Jianhua, Foshan, Guangdong 528311 (CN)
(74) Representative: Whitlock, Holly Elizabeth Ann
(86) International application number: PCT/CN2019/113408
(87) International publication number: WO 2020/177345

(56) References cited:
- EP-A1- 3 106 766
- CN-A- 1 632 386
- CN-A- 106 352 514
- CN-A- 106 642 355
- CN-A- 107 339 745
- CN-A- 107 477 695
- CN-A- 108 224 563
- CN-A- 108 489 057
- CN-A- 108 571 807
- CN-A- 108 644 895
- CN-A- 108 731 107
- CN-U- 205 119 278
- CN-U- 207 196 695
- CN-U- 207 945 734
- CN-U- 208 418 968
- JP-A- 2004 257 635
- US-A- 3 289 746

## Description

### TECHNICAL FIELD

The present disclosure relates to the technical field of air conditioners, in particular to an indoor unit of an air conditioner and an air conditioner applying the indoor unit.

### BACKGROUND

With surging demands of users on quality of life, air conditioners, which are widely used in daily life, have also been optimized accordingly. Fresh air assemblies have been introduced into indoor units of air conditioners, bring outside air into rooms and provide continuous and fresh air for closed indoor space, thus increasing the oxygen content of indoor air and eliminating air conditioner sickness.

However, a gap exists between the assembly of the fresh air assembly and the panel component. For example, the gap exists between the fresh air assembly and the face frame or between the panel and the face frame, which brings about an air leakage from the air outlet of the fresh air assembly. As such, the air output of the fresh air assembly has been reduced to some extent, and the air exchange capacity of the fresh air assembly is lowered. Further, such leakage may induce noise and condensation when the air enters the indoor unit.

CN 108 224 563 A relates generally to a fresh air indoor air conditioner unit comprising a housing and a fresh air device. The fresh air device comprises an air inlet module and a fan module communicating with the air inlet module. An air inlet cavity is defined in the air inlet module, and a pipeline connection portion communicating with the air inlet cavity is provided. The pipeline connection portion is connected to an outdoor fresh air inlet tube. An air supply fan is configured to intake, at an air inlet at the top portion of the housing, at least some of the air discharged by the centrifugal fan, and the air exchanges heat with a heat exchanger, and is then discharged via an air supply outlet at a lower portion of the housing.

Document CN 106 352 514 A discloses an indoor unit according to the preamble of claim 1.

The present invention proposes an indoor unit of an air conditioner, aiming at solving air leakage of a fresh air assembly at the air outlet.

In order to achieve the above object, the indoor unit of the air conditioner proposed by the present invention includes the features of claim 1.

In at least one embodiment, the first fresh air opening includes one opening or a plurality of small holes.

In at least one embodiment, the sealing component includes a first sealing ring fit sandwiched between the face frame and the fresh air assembly.

In at least one embodiment, the sealing component includes a second sealing ring fit sandwiched between the face frame and the panel.

In at least one embodiment, the sealing component includes a first sealing ring, a second sealing ring and a third sealing ring connecting one end of the first sealing ring and one end of the second sealing ring;
the first sealing ring, the second sealing ring and the third sealing ring are enclosed to form an open groove, and a part of the face frame corresponding to the edge of the second fresh air opening is embedded in the open groove;
the first sealing ring is abutted against the fresh air assembly, and the second sealing ring is abutted against the panel.

In at least one embodiment, the first sealing ring, the second sealing ring and the third sealing ring are integrally formed.

In at least one embodiment, the first sealing ring includes a first installing protrusion at a side of close to the fresh air assembly, the fresh air assembly defines a first groove corresponding to the first installing protrusion, for accommodating the first installing protrusion.

In at least one embodiment, the first installing protrusion is obliquely disposed.

In at least one embodiment, the first sealing ring includes a second installing protrusion at a side of close to the panel, the panel defines a second groove corresponding to the second installing protrusion, for accommodating the second installing protrusion.

In at least one embodiment, the second installing protrusion is obliquely disposed.

In at least one embodiment, the second sealing ring defines a limiting groove at a side close to the face frame, and the face frame includes a limiting protrusion correspondingly mated to the limiting groove.

In at least one embodiment, a cross section of the limiting protrusion and the limiting groove has a rectangular, a dovetail or a "V" shape.

In at least one embodiment, the first sealing ring includes a guiding portion at an end away from the third sealing ring, in which the guiding portion is obliquely disposed towards the fresh air assembly in a direction away from the third sealing ring.

In at least one embodiment, the fresh air assembly includes a cover, at least one inner wall surface of the cover is obliquely arranged from the face frame to one side of the panel, and the spacing between the inner wall surface and the wall surface opposite to the inner wall surface is increased from the face frame to one side of the panel;

The third sealing ring is obliquely arranged corresponding to the side surface of the inner wall surface, and the side surface is consistent with the inclined direction of the inner wall surface.

In at least one embodiment, the cover includes a fresh air screen.

In at least one embodiment, the fresh air assembly includes a cover, a fresh air duct and a fan in the cover, in which the fresh air duct is independent from an air passage of the indoor unit, and includes an air inlet and an air outlet, in which the air inlet is communicated with the outer environment; the air outlet is communicated with the second fresh air opening.

In at least one embodiment, the panel includes a panel body and an fresh air outlet plate connected with the panel body, the fresh air outlet plate is disposed corresponding to the fresh air assembly, and defines the first fresh air opening.

In at least one embodiment, the fresh air outlet plate is detachably connected with the panel body; or, the fresh air outlet plate is rotatably mounted on the panel body.

In at least one embodiment, the indoor unit is a stand unit, a celling unit or a wall-mounted indoor unit.

The present invention further proposes an air conditioner according to claim 15.

According to the air conditioner indoor unit proposed by the present invention, the sealing component is disposed at the second fresh air opening of the face frame, and the sealing component can seal the gap between the face frame and the fresh air assembly and/or the gap between the face frame and the panel, so that the air outlet of the fresh air assembly does not leak into the housing, thereby reducing the loss of the air output of the fresh air assembly, improving the air exchange capacity of the fresh air assembly, and simultaneously preventing the air from entering the interior of the indoor unit body to bring about noise and condensation.

### BRIEF DESCRIPTION OF THE DRAWINGS

In order to explain the embodiment of the present invention or the technical solution of the prior art more clearly, the following will briefly introduce the drawings necessary in the description of the embodiments or the prior art. It will be appreciated that the drawings in the following description are only some embodiments of the present invention. For those of ordinary skill in the art, other embodiments can be obtained according to the structure shown in these drawings without any creative effort.
Fig. 1 is a schematic cross sectional view of an indoor unit of air conditioner according to an embodiment of the present invention;
Fig. 2 is a partial enlarged view at portion A in Fig. 1;
Fig. 3 is a schematic structural view of the indoor unit of air conditioner according to another embodiment of the present invention;
Fig. 4 is a partial enlarged view at portion B in Fig. 3;
Fig. 5 is a schematic structural diagram of an indoor air conditioning unit according to another embodiment of the present invention;
Fig. 6 is a partial enlarged view at portion C in Fig. 5;
Fig. 7 is a schematic structural diagram of a sealing component of an indoor air conditioning unit according to an embodiment of the present invention;
Fig. 8 is a schematic cross sectional structural view of the sealing component in Fig. 7;
Fig. 9 is another schematic cross sectional structural view of the sealing component in Fig. 7;
Fig. 10 is a partial enlarged view at portion D in Fig. 9.

### Description of reference numerals

| Reference Numeral | Name | Reference Numeral | Name | Reference Numeral | Name |
|---|---|---|---|---|---|
| 100 | Indoor unit of air conditioner | 123 | Panel body | 311 | First installing protrusion |
| 1 | Housing | 124 | Fresh air outlet plate | 312 | Guiding portion |
| 11 | Face frame | 2 | Fresh air assembly | 32 | Second sealing ring |
| 111 | Second fresh air opening | 21 | First groove | 321 | Second installing protrusion |
| 112 | Limiting protrusion | 22 | Cover | 322 | Limiting groove |
| 12 | Panel | 221 | Inner wall surface | 33 | Third sealing ring |
| 121 | First Fresh air opening | 3 | Sealing component | 331 | Side surface |
| 122 | Second groove | 31 | First sealing ring | 34 | Open groove |

The implementation, functional characteristics and advantages of the present invention will be further described with reference to the attached drawings in combination with embodiments.

### DETAILED DESCRIPTION OF THE EMBODIMENTS

It should be noted that if directional indications (such as up, down, left, right, front, back, etc.) are involved in the embodiments of the present invention, the directional indications are only used to explain the relative positional relationship and movement between the components in a certain posture (as shown in the drawings), and if the specific posture changes, the directional indications will change accordingly.

In addition, if there are descriptions of "first" and "second" in the embodiments of this invention, the descriptions of "first" and "second" are used for descriptive purposes only and cannot be appreciated as indicating or implying their relative importance or implicitly indicating the number of indicated technical features. Thus, features defining "first" and "second" may explicitly or implicitly include at least one such feature. In addition, the meaning of "and/or" appearing in the full text is to include three parallel schemes, taking "a and/or b" as some embodiments, including solution of a or b, or solution that both a and b satisfy at the same time. In addition, aspects of the technical solutions between the various embodiments may be combined with each other to form further alternative embodiments. When the combination of technical solutions is contradictory or impossible to achieve, it should be considered that the combination of such technical solutions does not exist and is not within the protection scope required by the present invention.

The present invention provides an indoor unit of an air conditioner.

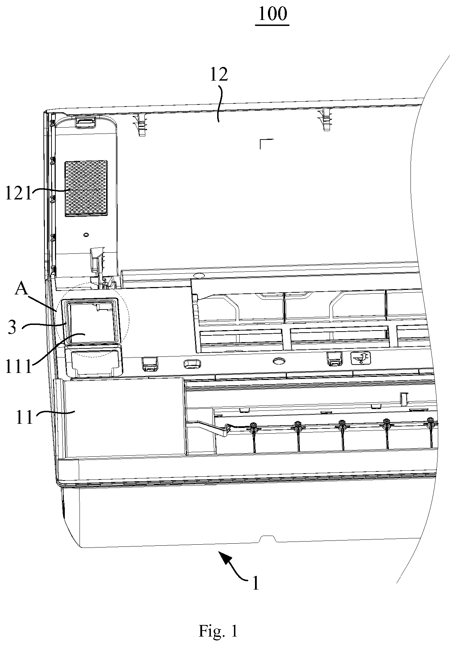

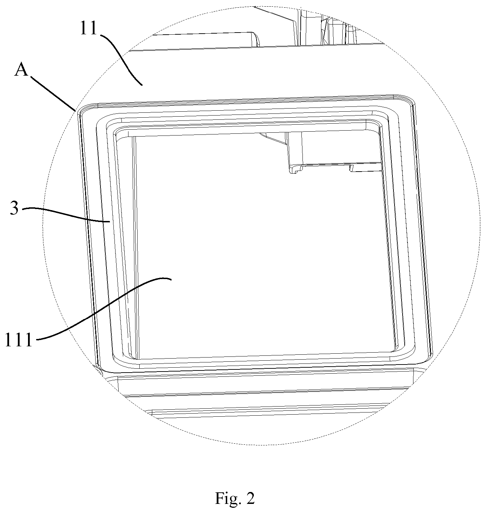

In at least one embodiment of the present invention, as shown in Figs. 1 to 4, the air conditioner indoor unit 100 includes:
a housing 1 which includes a face frame 11 and a panel 12. The panel 12 is provided with a first fresh air opening 121, and the face frame 11 is provided with a second fresh air opening 111 corresponding to the first fresh air opening 121;
a fresh air assembly 2 installed in the housing 1, and the air passage of the fresh air assembly 2 is communicated with the second fresh air opening 111, and
a sealing component 3 arranged at the second fresh air opening 111, and is configured to seal a gap between the sealing surface frame 11 and the fresh air assembly 2 and/or a gap between the sealing surface frame 11 and the panel 12.

In the present embodiment, the indoor unit of an air conditioner 100 may be a stand unit, a ceiling unit, a wall-mounted indoor unit, or the like. The housing 1 can provide a basic space for installation and a supporting structure for the indoor unit 100 of an air conditioner. The housing 1 may also include an air guiding plate, a chassis, etc. The face frame 11 can provide basic installation and support for the components installed therein, and takes typically a frame structure. The specific structure can refer to the design in the market. The panel 12 is usually installed on the front side of the face frame 11 to maintain the overall consistency of the indoor unit 100. The panel 12 can be detachably installed on the face frame 11 or movably connected to the face frame 11. The specific structure is not limited herein, and an appropriate design can be selected according to practical requirements. The first fresh air opening 121 provided on the panel 12 may be an opening or may be of a plurality of small holes.

The fresh air assembly 2 is typically installed in the housing 1, and can introduce outdoor air into the room through the air passage, and then enter the room after passing through the second fresh air opening 111 and the first fresh air opening 121 in sequence to provide continuous and fresh air for the closed indoor space, thereby increasing the oxygen content of the indoor air and eliminating air conditioner sickness. The fresh air assembly 2 is generally provided with a cover 22 to form an air passage inside. The sealing component 3 can seal the gap between the cover 22 and the face frame 11. The sealing component 3 may be consist of one or more of sealants, rubber sealing components, silica-gel sealing components, etc. The sealing component 3 can be a structure independent of the fresh air assembly 2, the face frame 11, and the panel 12.

The arrangement of the sealing component 3 at the second fresh air opening 111 is not limited herein to be mounted on the face frame 11, but only emphasizes the relative position between the sealing component 3 and the second fresh air opening 111. That is, the sealing component 3 may be mounted on the face frame 11 or other structures which is mounted at the second fresh air opening 111. When the sealing component 3 is only used to seal the gap between the face frame 11 and the fresh air assembly 2, the gap between the face frame 11 and the panel 12 can be sealed by glue, or by nature of the structure regarding the panel 12 and the face frame 11 themselves, etc. Similarly, when the sealing component 3 is only used to seal the gap between the face frame 11 and the panel 12, the gap between the fresh air assembly 2 and the face frame 11 can be sealed by glue, or by the nature of the structure of the fresh air assembly 2 and the face frame 11 themselves, etc.

According to the indoor unit 100 proposed by the present invention, the sealing component 3 is disposed at the second fresh air opening 111 of the face frame 11, and the sealing component 3 can seal the gap between the face frame 11 and the fresh air assembly 2 and/or the gap between the face frame 11 and the panel 12, so that the air outlet of the fresh air assembly 2 does not leak into the housing 1, thereby reducing the loss of the air output of the fresh air assembly 2, improving the air exchange capacity of the fresh air assembly 2, and simultaneously preventing the air from entering the interior of the indoor unit body to bring about noise and condensation.

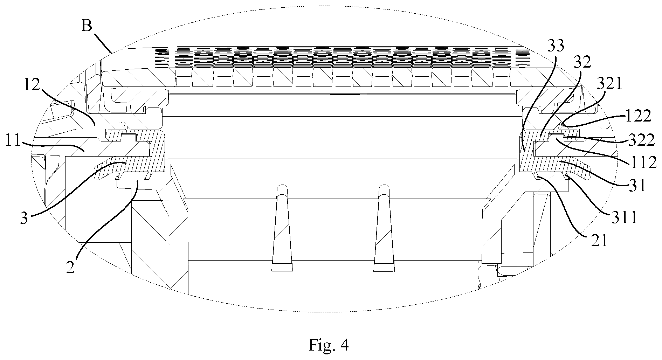

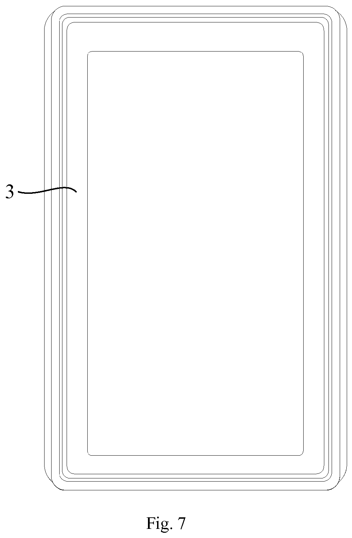

Further, referring to Figs. 4, 7 and 8, the sealing component 3 includes a first sealing ring 31 sandwiched between the face frame 11 and the fresh air assembly 2.

In the present embodiment, in order to improve the sealing effect, the shape of the first sealing ring 31 is preferably similar to that of the second fresh air opening 111. For example, when the second fresh air opening 111 is arranged rectangular, the first sealing ring 31 can be also arranged rectangle, and the hollow part of the first sealing ring 31 is also rectangular, which is disposed corresponding to the second fresh air opening 111 to minimize shielding and facilitate a better outflow of fresh air. It can be appreciated that the first sealing ring 31 is sandwiched between the face frame 11 and the fresh air assembly 2, which means that the first sealing ring 31 is sandwiched between the edge of the face frame 11 near the second fresh air opening 111 and the outer wall surface of the fresh air assembly 2 near the second fresh air opening 111. The first sealing ring 31 can seal the gap between the face frame 11 and the fresh air assembly 2, so that when outdoor air enters the room through the fresh air assembly 2, the air can be prevented from flowing into the housing 1 from the gap between the face frame 11 and the fresh air assembly 2, thereby reducing the air output loss from the fresh air assembly 2, improving the air exchange capacity of the fresh air assembly 2, and simultaneously preventing the air from entering the interior of the indoor unit body to bring about noise and condensation.

Further, the sealing component 3 includes a second sealing ring 32 sandwiched between the face frame 11 and the panel 12.

In the present embodiment, in order to make the sealing effect better, the shape of the second sealing ring 32 is preferably similar to the shape of the second fresh air opening 111. For example, when the second fresh air opening 111 is arranged rectangular, the second sealing ring 32 can be also arranged rectangle, and the hollow part of the second sealing ring 32 is also rectangular, which is disposed corresponding to the second fresh air opening 111 to minimize shielding and facilitate a better outflow of fresh air. It can be appreciated that the second sealing ring 32 is sandwiched between the face frame 11 and the panel 12, which means that the second sealing ring 32 is sandwiched between the edge of the face frame 11 close to the second fresh air opening 111, and the edge of the panel 12 close to the first fresh air opening 121. The second sealing ring 32 can seal the gap between the face frame 11 and the panel 12, so that when outdoor air enters the room through the fresh air assembly 2, the air can be prevented from flowing into the housing 1 from the gap between the face frame 11 and the panel 12, thereby reducing the air output loss from the fresh air assembly 2, improving the air exchange capacity of the fresh air assembly 2, and simultaneously preventing the air from entering the interior of the indoor unit body to bring about noise and condensation.

The first sealing ring 31 and the second sealing ring 32 aforementioned may be two separate parts or two sealing rings formed by one sealing member. The first sealing ring 31 and the second sealing ring 32 may be integrally formed sealing rings or may be formed by splicing several sealing strips.

Further, the sealing component 3 includes a first seal ring 31, a second seal ring 32, and a third seal ring 33 connecting one end of the first seal ring 31 and one end of the second seal ring 32.

The first sealing ring 31, the second sealing ring 32 and the third sealing ring 33 are enclosed to form an open groove 34, and the face frame 11 is embedded in the open groove 34 corresponding to the edge of the second fresh air opening 111.

The first sealing ring 31 is tightly attached to the fresh air assembly 2, and the second sealing ring 32 is tightly attached to the panel 12.

In the present embodiment, it can be appreciated that the shape of the open groove 34 formed by enclosing the first sealing ring 31, the second sealing ring 32 and the third sealing ring 33 is mated to the shape of the edge of the face frame 11 corresponding to the second fresh air opening 111. The groove height of the open groove 34 may be equal to or slightly smaller than the edge thickness of the face frame 11 corresponding to the second fresh air opening 111 . By embedding the edge of the face frame 11 corresponding to the second fresh air opening 111 into the open groove 34, the gap between the face frame 11 and the panel 12 and the gap between the fresh air assembly 2 and the face frame 11 can be sealed at the same time, and the third sealing ring 33 enables the overall sealing effect better. The first sealing ring 31, the second sealing ring 32 and the third sealing ring 33 can be integrally formed, so that the installation of the sealing component 3 can be facilitated. During installation, only the edge of the face frame 11 corresponding to the second fresh air opening 111 needs to be embedded into the open groove 34, and the gap between the face frame 11 and the panel 12 and the gap between the face frame 11 and the fresh air assembly 2 can be sealed at the same time.

Further, one side of the first sealing ring 31 close to the fresh air assembly 2 is provided with a first installing protrusion 311. The fresh air assembly 2 is provided with a first groove 21 corresponding to the first installing protrusion 311, and the first installing protrusion 311 is embedded in the first groove 21.

In the present embodiment, the first installing protrusion 311 may be only one projection, a plurality of projections spaced circumferentially alike the first sealing ring 31, or a protruding ribs circumferentially around the first sealing ring 31. The number of the first installing protrusions 311 or the first grooves 21 may be more than one, and an appropriate number of the first installing protrusions 311 and the first grooves 21 may be designed according to the width of the first sealing ring 31 as well as the practical requirements. Correspondingly, the first groove 21 may be a plurality of spaced grooves or an annular groove. By arranging the first installing protrusion 311 on the first sealing ring 31, when the first sealing ring 31 is installed between the fresh air assembly 2 and the face frame 11, the first installing protrusion 311 is firstly fit in the first groove 21, and then the first sealing ring 31 and the fresh air assembly 2 are abutted against each other through pressure. As such, the installation of the first sealing ring 31 and the fresh air assembly 2 can be facilitated, the attachment is more tightly, and the dislocation and displacement can be prevented between the first sealing ring 31 and the fresh air assembly 2 in the meantime.

Further, the first installing protrusion 311 can be disposed obliquely. The inclination of the first installing protrusion 311 may be in any direction. When the first installing protrusion 311 is an installing protruded ribs disposed around the first sealing ring 31, the inclined position of the first installing protrusion 311 may be towards to or away from the third sealing ring 33. Therefore, the first installing protrusion 311 is obliquely arranged, which is not only convenient for molding and manufacturing, but also convenient for installing the first sealing ring 31 and provides a certain tolerance in installing deformation.

Further, one side of the second sealing ring 32 close to the panel 12 is provided with a second installing protrusion 321, the panel 12 is provided with a second groove 122 corresponding to the second installing protrusion 321, and the second installing protrusion 321 is embedded in the second groove 122.

In the present embodiment, the second installing protrusion 321 may be only one projection, a plurality of projections spaced circumferentially alike the second sealing ring 32, or a protruding ribs circumferentially around the second sealing ring 32. The number of the second installing protrusions 321 or the second grooves 122 may be more than one, and an appropriate number of the second installing protrusions 321 and the second grooves 122 may be designed according to the width of the second sealing ring 32 as well as the practical requirements. Correspondingly, the second groove 122 may be a plurality of spaced grooves or an annular groove. By arranging the second installing protrusion 321 on the second sealing ring 32, when the second sealing ring 32 is installed between the face frame 11 and the panel 12, the second installing protrusion 321 can be firstly installed in the second groove 122, and then the second sealing ring 32 is abutted against the panel 12 by pressure. Thus, the installation of the second sealing ring 32 and the panel 12 can be facilitated, and the attachment is more tightly, and the dislocation and displacement can also be prevented between the second sealing ring 32 and the panel 12.

Further, the second installing protrusion 321 is disposed obliquely. The inclination of the second installing protrusion 321 may be in any direction. When the second installing protrusion 321 is an installing protruded ribs disposed around the second sealing ring 31, the inclined position of the second installing protrusion 321 may be towards to or away from the third sealing ring 33. Therefore, the second installing protrusion 321 is obliquely arranged, which is not only convenient for molding and manufacturing, but also convenient for installing the second sealing ring 32 and provides a certain tolerance in installing deformation.

Further, one side of the second sealing ring 32 close to the face frame 11 is provided with a limiting groove 322, and the face frame 11 corresponding to the limiting groove 322 is provided with a limiting protrusion 112 which is in a limit fit with the limiting groove 322.

In the present embodiment, by providing the limiting groove 322 on the second sealing ring 32 and providing the limiting protrusion 112 in a limit fit with the limiting groove 322 on the face frame 11, the installation can be more stable and the second sealing ring 32 can be prevented from falling from the face frame 11, when the second sealing ring 32 is installed on the face frame 11. The cross-sectional shapes of the limiting protrusion 112 and the limiting groove 322 can be rectangular, dovetail-shaped, V-shaped, etc. They can be designed according to practical requirements, which are not specifically limited herein. In some other embodiments, one side of the second sealing ring 32 close to the face frame 11 is provided with a limiting protrusion 112, and at the face frame 11 corresponding to the limiting groove 322 is provided with a limiting groove 322 which is in a limit fit with the limiting protrusion 112. This may achieves a similar effect that prevents the second sealing ring 32 from falling from the face frame 11.

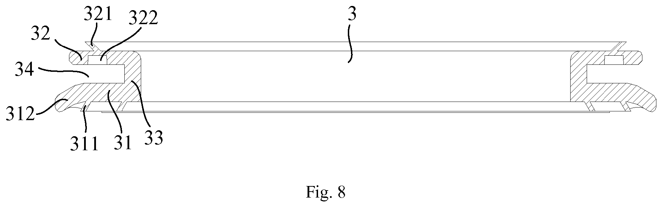

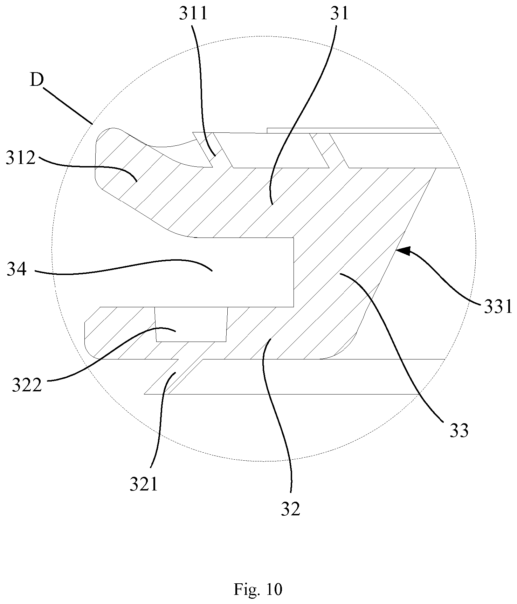

Further, referring to Figs. 8 and 10, one end of the first sealing ring 31 away from the third sealing ring 33 is provided with a guiding portion 312, and the guiding portion 312 is inclined towards the fresh air assembly 2 from the direction away from the third sealing ring 33.

In the present embodiment, the guiding portion 312 provided by the first sealing ring 31 can guide for the installation of the first sealing ring 31, and the inclined arrangement of the guiding portion 312 can facilitate the installation of the first sealing ring 31 into the gap between the fresh air assembly 2 and the face frame 11.

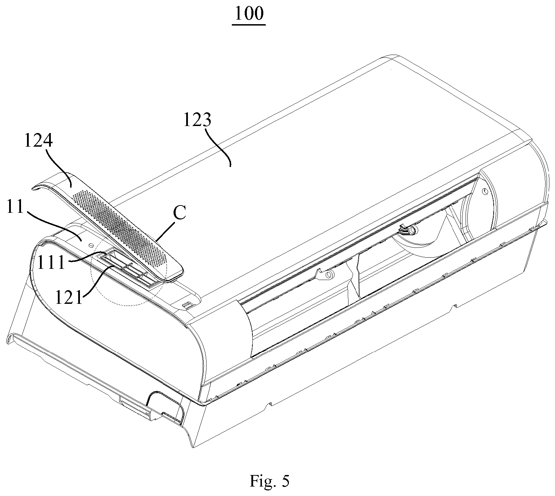

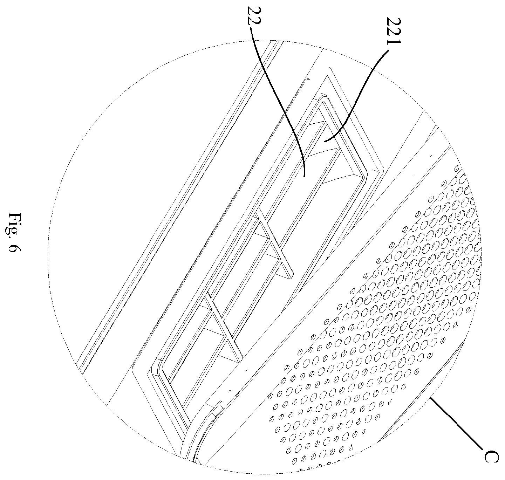

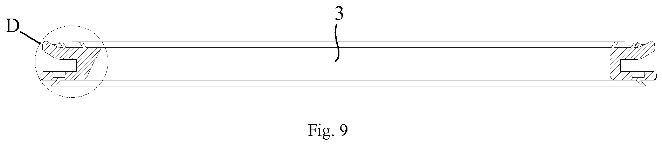

Another embodiment will now be described with reference to Fig. 5, Fig. 6, Fig. 9 and Fig. 10 in combination. The fresh air assembly 2 includes a cover 22, at least one inner wall surface 221 of the cover 22 is disposed obliquely from the face frame 11 to the panel 12, and the distance between the inner wall surface 221 and its opposite wall surface increases in a direction from the face frame 11 towards to the panel 12.

The side surface 331 is disposed obliquely of the third sealing ring 33 corresponding to the inner wall surface 221, and the inclined direction is consistent with that of the inner wall surface 221.

In the present embodiment, the cover 22 may include a fresh air screen, which plays a role in dust prevention and dust filtration. The fresh air screen is typically installed at the air outlet of the air passage, then the inclined inner wall surface 221 may also be the inner wall surface 221 of the fresh air screen. If the distance between the inclined inner wall surface 221 and its opposite wall surface is gradually increased in a direction from the surface frame 11 towards the panel 12, the inner wall surface 221 can play a role in guiding the air after flowing out of the air outlet, thereby enabling the flowing of the fresh air more smoothly. The inner wall surface 221 may be more than one and may be designed according to practical requirements. As long as the side surface 331 of the third sealing ring 33 corresponding to the inner wall surface 221 is disposed obliquely, and inclined direction of the side is consistent with that of the inner wall surface 221, the side surface 331 of the third sealing ring 33 may not hinder but guide the outflow of fresh air. In order to achieve a better air guiding effect and make the overall more uniform and aesthetic, it is preferable that the inclination angle of the side surface 331 and the inner wall surface 221 is the same.

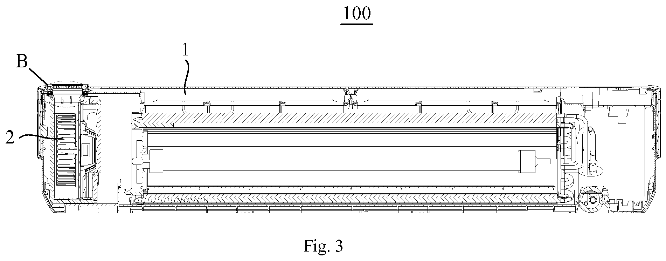

Further, as shown in Fig. 3, the fresh air assembly 2 includes a cover 22, a fresh air duct (not shown) and a fan (not shown) provided in the cover 22. The fresh air duct (not shown) and the air passage of the air conditioner indoor unit 100 are arranged independently of each other. The fresh air duct (not shown) includes an air inlet (not shown) and an air outlet (not shown), the air inlet (not shown) is communicated with the outside, and the air outlet (not shown) is communicated with the second fresh air opening 111.

In the present embodiment, the cover 22 provides a fundamental room for installing a fan (not shown) placed therein, and in the meanwhile a fresh air duct (not shown) forms inside, which usually includes a scroll tongue and a scroll housing. The fresh air duct (not shown) and the air passage of the air conditioner indoor unit 100 are arranged independently of each other, so the fresh air introduced by the fresh air duct (not shown) will not affect the air with heat-exchanged in the indoor unit 100 of the air conditioner. The air inlet of the fresh air duct (not shown) can be communicated with the outdoor through the air passage to introduce outdoor fresh air into the fresh air duct (not shown). Outdoor fresh air is introduced into the air passage through the action of fans (not shown), and then flows into the room through the air outlet, the second fresh air opening 111 and the first fresh air opening 121 in sequence to complete the fresh air introduction. The fan (not shown) may be a centrifugal fan (not shown), a cross-flow fan (not shown), an axial flow fan (not shown), or the like, and is not specifically limited herein.

Further, as shown in Figs. 1 and 5, the panel 12 includes a panel body 123 and a fresh air outlet plate 124 connected to the panel body 123. The fresh air outlet plate 124 is disposed corresponding to the fresh air assembly 2, and the first fresh air opening 121 is disposed on the fresh air outlet plate 124.

In the present embodiment, the panel 12 is composed of a panel body 123 and a fresh air outlet plate 124, and the panel body 123 may be connected or spliced with the fresh air outlet plate 124 to form the panel 12. The fresh air outlet plate 124 may be rotatably mounted on the panel body 123, may be detachably connected to the panel body 123, or may be provided with an adjustable structure to realize the joint with the panel body 123, and the connection is not specifically limited herein. The fresh air outlet plate 124 is independent disposed and can facilitate disassembly and cleaning of the fresh air assembly 2. The first fresh air opening 121 provided on the fresh air outlet plate 124 may be of an opening or a plurality of small holes.

The present invention further proposes an air conditioner, which includes an outdoor unit and an indoor unit 100. The specific structure of the indoor unit 100 refers to the above-mentioned embodiments. Since the air conditioner adopts all the technical solutions of the above-mentioned embodiments, it has at least all the beneficial effects brought by the technical solutions of the above-mentioned embodiments, and will not be repeated herein.

## Claims

1. An indoor unit (100) of an air conditioner, comprising:
a housing (1) comprising:
a panel (12) defining a first fresh air opening (121); and **characterised by**
a face frame (11) defining a second fresh air opening (111) corresponding to the first fresh air opening (121);
a fresh air assembly (2) in the housing (1), comprising an air duct communicated with the second fresh air opening (111); and
a sealing component (3) at a periphery of the second fresh air opening (111), configured to seal a gap between the face frame (11) and the panel (12), **characterised in that** the sealing component is configured to seal a gap between the face frame (11) and the fresh air assembly (2).

2. The indoor unit (100) of claim 1, wherein:
the first fresh air opening (121) comprises one opening or a plurality of small holes;
the sealing component (3) comprises a first sealing ring (31) sandwichedly fit between the face frame (11) and the fresh air assembly (2);
the sealing component (3) comprises a second sealing ring (32) sandwichedly fit between the face frame (11) and the panel (12); and
the indoor unit (100) is a stand unit, a ceiling unit or a wall-mounted indoor unit.

3. The indoor unit (100) of any one of claims 1 to 2, wherein the sealing component (3) comprises:
the first sealing ring (31) abutted against the fresh air assembly (2);
the second sealing ring (32) abutted against the panel (12); and
a third sealing ring (33) connecting an end of the first sealing ring (31) and an end of the second sealing ring (32),
wherein the first sealing ring (31), the second sealing ring (32) and the third sealing ring (33) are enclosed to form an open groove (34), and an edge of the face frame (11) corresponding to the edge of the second fresh air opening (111) is embedded in the open groove (34).

4. The indoor unit (100) of claim 3, wherein the first sealing ring (31), the second sealing ring (32) and the third sealing ring (33) are integrally formed.

5. The indoor unit (100) of any one of claims 1 to 4, further comprising:
a first installing protrusion (311) at a side of the first sealing ring (31) close to the fresh air assembly (2), and
wherein the fresh air assembly (2) defines a first groove (21) corresponding to the first installing protrusion (311), for accommodating the first installing protrusion (311).

6. The indoor unit (100) of claim 5, wherein
the first installing protrusion (311) is obliquely disposed.

7. The indoor unit (100) of any one of claims 1 to 6, further comprising:
a second installing protrusion (321) at a side of the first sealing ring (31) close to the panel (12),
wherein the panel (12) defines a second groove (122) corresponding to the second installing protrusion (321), for accommodating the second installing protrusion (321).

8. The indoor unit (100) of claim 7,
wherein the second installing protrusion (321) is obliquely disposed; and
a side of the second sealing ring (32) close to the face frame (11) defines a limiting groove (322), wherein the face frame (11) comprises a limiting protrusion (112) correspondingly mated to the limiting groove (322).

9. The indoor unit (100) of any one of claims 3 to 8,
wherein an end of the first sealing ring (31) away from the third sealing ring (33) comprises a guiding portion (312), and
wherein the guiding portion (312) is obliquely disposed towards the fresh air assembly (2) in a direction away from the third sealing ring (33).

10. The indoor unit (100) of any one of claims 3 to 9,
wherein the fresh air assembly (2) comprises:
a cover (22) having at least one inner wall surface (221) inclined in a direction from the face frame (11) to the panel (12),
wherein a distance is increased between the at least one inner wall surface (221) and a wall surface opposite to the at least one inner wall surface (221) in a direction from the face frame (11) to the panel (12), and
wherein the third sealing ring (33) is obliquely disposed corresponding to a side surface (331) relative to the at least one inner wall surface (221), and the side surface (331) is obliquely disposed in a same direction as the at least one inner wall surface (221).

11. The indoor unit (100) of claim 10,
wherein the cover (22) comprises a fresh air screen.

12. The indoor unit (100) of any one of claims 1 to 11,
wherein the ventilation component comprises a cover (22), a fresh air passage and a fan in the cover (22),
wherein the fresh air passage is independent from an air passage of the indoor unit (100), and comprises an air inlet and an air outlet, wherein the air inlet is communicated with the outer environment, and the air outlet is communicated with the second fresh air opening (111).

13. The indoor unit (100) of any one of claims 1 to 12,
wherein the panel (12) comprises:
a panel body (123); and
an fresh air outlet plate (124) connected with the panel body (123), and disposed corresponding to the fresh air assembly (2),
wherein fresh air outlet plate (124) defines the first fresh air opening (121).

14. The indoor unit (100) of claim 13,
wherein the fresh air outlet plate (124) is detachably connected with the panel body (123); or
wherein the fresh air outlet plate (124) is rotatably mounted on the panel body (123).

15. An air conditioner, comprising:
an indoor unit (100) as recited in any one of claims 1 to 14,
an outdoor unit connected to the indoor unit (100).

## Patentansprüche

1. Inneneinheit (100) einer Klimaanlage, die Folgendes aufweist:
ein Gehäuse (1), das Folgendes aufweist:
eine Platte (12), die eine erste Frischluftöffnung (121) definiert; und **gekennzeichnet durch**
einen Frontrahmen (11), der eine der ersten Frischluftöffnung (121) entsprechende zweite Frischluftöffnung (111) definiert;
eine Frischluftanordnung (2) in dem Gehäuse (1), die einen mit der zweiten Frischluftöffnung (111) in Kommunikation stehenden Luftkanal aufweist; und
eine Dichtungskomponente (3) an einem Umfang der zweiten Frischluftöffnung (111), die zum Abdichten eines Spalts zwischen dem Frontrahmen (11) und der Platte (12) konfiguriert ist, **dadurch gekennzeichnet, dass** die Dichtungskomponente zum Abdichten eines Spalts zwischen dem Frontrahmen (11) und der Frischluftanordnung (2) konfiguriert ist.

2. Inneneinheit (100) nach Anspruch 1, wobei:
die erste Frischluftöffnung (121) eine Öffnung oder eine Mehrzahl kleiner Löcher aufweist;
die Dichtungskomponente (3) einen ersten Dichtungsring (31) aufweist, der zwischengelegt zwischen dem Frontrahmen (11) und der Frischluftanordnung (2) eingebaut ist;
die Dichtungskomponente (3) einen zweiten Dichtungsring (32) aufweist, der zwischengelegt zwischen dem Frontrahmen (11) und der Platte (12) eingebaut ist; und
die Inneneinheit (100) eine Standeinheit, eine Deckeneinheit oder eine wandmontierte Inneneinheit ist.

3. Inneneinheit (100) nach einem der Ansprüche 1 bis 2, wobei die Dichtungskomponente (3) Folgendes aufweist:
den ersten Dichtungsring (31), der an der Frischluftanordnung (2) in Anlage ist;
den zweiten Dichtungsring (32), der an der Platte (12) in Anlage ist; und
einen dritten Dichtungsring (33), der ein Ende des ersten Dichtungsrings (31) und ein Ende des zweiten Dichtungsrings (32) verbindet,
wobei der erste Dichtungsring (31), der zweite Dichtungsring (32) und der dritte Dichtungsring (33) umschlossen sind, um eine offene Nut (34) zu bilden, und ein Rand des Frontrahmens (11), der dem Rand der zweiten Frischluftöffnung (111) entspricht, in der offenen Nut (34) eingebettet ist.

4. Inneneinheit (100) nach Anspruch 3, wobei der erste Dichtungsring (31), der zweite Dichtungsring (32) und der dritte Dichtungsring (33) einstückig ausgebildet sind.

5. Inneneinheit (100) nach einem der Ansprüche 1 bis 4, die ferner Folgendes aufweist:
einen ersten Einbauvorsprung (311) an einer Seite des ersten Dichtungsrings (31) nahe der Frischluftanordnung (2) und
wobei die Frischluftanordnung (2) eine dem ersten Einbauvorsprung (311) entsprechende erste Nut (21) zur Aufnahme des ersten Einbauvorsprungs (311) definiert.

6. Inneneinheit (100) nach Anspruch 5, wobei
der erste Einbauvorsprung (311) schräg angeordnet ist.

7. Inneneinheit (100) nach einem der Ansprüche 1 bis 6, die ferner Folgendes aufweist:
einen zweiten Einbauvorsprung (321) an einer Seite des ersten Dichtungsrings (31) nahe der Platte (12),
wobei die Platte (12) eine dem zweiten Einbauvorsprung (321) entsprechende zweite Nut (122) zur Aufnahme des zweiten Einbauvorsprungs (321) definiert.

8. Inneneinheit (100) nach Anspruch 7,
wobei der zweite Einbauvorsprung (321) schräg angeordnet ist; und
eine Seite des zweiten Dichtungsrings (32) nahe dem Frontrahmen (11) eine Begrenzungsnut (322) definiert, wobei der Frontrahmen (11) einen Begrenzungsvorsprung (112) definiert, der mit der Begrenzungsnut (322) entsprechend zusammengepasst ist.

9. Inneneinheit (100) nach einem der Ansprüche 3 bis 8,
wobei ein vom dritten Dichtungsring (33) entferntes Ende des ersten Dichtungsrings (31) einen Führungsteil (312) aufweist und
wobei der Führungsteil (312) in einer Richtung vom dritten Dichtungsring (33) weg schräg zur Frischluftanordnung (2) hin angeordnet ist.

10. Inneneinheit (100) nach einem der Ansprüche 3 bis 9,
wobei die Frischluftanordnung (2) Folgendes aufweist:
eine Abdeckung (22) mit mindestens einer Innenwandfläche (221), die in einer Richtung vom Frontrahmen (11) zur Platte (12) geneigt ist,
wobei ein Abstand zwischen der mindestens einen Innenwandfläche (221) und einer der mindestens einen Innenwandfläche (221) gegenüberliegenden Wandfläche in einer Richtung vom Frontrahmen (11) zur Platte (12) zunimmt und
wobei der dritte Dichtungsring (33) entsprechend einer Seitenfläche (331) relativ zu der mindestens einen Innenwandfläche (221) schräg angeordnet ist und die Seitenfläche (331) in der gleichen Richtung wie die mindestens eine Innenwandfläche (221) schräg angeordnet ist.

11. Inneneinheit (100) nach Anspruch 10,
wobei die Abdeckung (22) ein Frischluftgitter aufweist.

12. Inneneinheit (100) nach einem der Ansprüche 1 bis 11,
wobei die Lüftungskomponente eine Abdeckung (22), einen Frischluftkanal und einen Ventilator in der Abdeckung (22) aufweist,
wobei der Frischluftkanal unabhängig von einem Luftkanal der Inneneinheit (100) ist und einen Lufteinlass und einen Luftauslass aufweist, wobei der Lufteinlass mit der äußeren Umgebung in Kommunikation steht und der Luftauslass mit der zweiten Frischluftöffnung (111) in Kommunikation steht.

13. Inneneinheit (100) nach einem der Ansprüche 1 bis 12,
wobei die Platte (12) Folgendes aufweist:
einen Plattenkörper (123); und
eine Frischluftauslassplatte (124), die mit dem Plattenkörper (123) verbunden ist und entsprechend der Frischluftanordnung (2) angeordnet ist,
wobei die Frischluftauslassplatte (124) die erste Frischluftöffnung (121) definiert.

14. Inneneinheit (100) nach Anspruch 13,
wobei die Frischluftauslassplatte (124) abnehmbar mit dem Plattenkörper (123) verbunden ist; oder
wobei die Frischluftauslassplatte (124) drehbar am Plattenkörper (123) montiert ist.

15. Klimaanlage, die Folgendes aufweist:
eine Inneneinheit (100) nach einem der Ansprüche 1 bis 14,
eine mit der Inneneinheit (100) verbundene Außeneinheit.

## Revendications

1. Unité intérieure (100) d'un climatiseur, comprenant :
un boîtier (1) comprenant :
un panneau (12) définissant une première ouverture d'air frais (121) ; et **caractérisée par** :
un cadre frontal (11) définissant une seconde ouverture d'air frais (111) correspondant à la première ouverture d'air frais (121) ;
un ensemble d'air frais (2) dans le boîtier (1), comprenant un conduit d'air en communication avec la seconde ouverture d'air frais (111) ; et
un composant d'étanchéité (3) au niveau d'une périphérie de la seconde ouverture d'air frais (111), configuré pour étancher un espace entre le cadre frontal (11) et le panneau (12), **caractérisée en ce que** le composant d'étanchéité est configuré pour étancher un espace entre le cadre frontal (11) et l'ensemble d'air frais (2).

2. Unité intérieure (100) selon la revendication 1,
la première ouverture d'air frais (121) comprenant une ouverture ou une pluralité de petits trous ;
le composant d'étanchéité (3) comprenant une première bague d'étanchéité (31) ajustée intercalée entre le cadre frontal (11) et l'ensemble d'air frais (2) ;
le composant d'étanchéité (3) comprenant une deuxième bague d'étanchéité (32) ajustée intercalée entre le cadre frontal (11) et le panneau (12) ; et
l'unité intérieure (100) étant une unité sur pied, une unité au plafond ou une unité intérieure murale.

3. Unité intérieure (100) selon l'une quelconque des revendications 1 et 2, le composant d'étanchéité (3) comprenant :
la première bague d'étanchéité (31) en butée contre l'ensemble d'air frais (2) ;
la deuxième bague d'étanchéité (32) en butée contre le panneau (12) ; et
une troisième bague d'étanchéité (33) reliant une extrémité de la première bague d'étanchéité (31) et une extrémité de la deuxième bague d'étanchéité (32),
la première bague d'étanchéité (31), la deuxième bague d'étanchéité (32) et la troisième bague d'étanchéité (33) étant enfermées pour former une rainure ouverte (34), et un bord du cadre frontal (11) qui correspond au bord de la seconde ouverture d'air frais (111) étant encastré dans la rainure ouverte (34).

4. Unité intérieure (100) selon la revendication 3, la première bague d'étanchéité (31), la deuxième bague d'étanchéité (32) et la troisième bague d'étanchéité (33) étant formées d'une seule pièce.

5. Unité intérieure (100) selon l'une quelconque des revendications 1 à 4, comprenant en outre :
une première saillie d'installation (311) au niveau d'un côté de la première bague d'étanchéité (31) à proximité de l'ensemble d'air frais (2), et
l'ensemble d'air frais (2) définissant une première rainure (21) correspondant à la première saillie d'installation (311), pour recevoir la première saillie d'installation (311).

6. Unité intérieure (100) selon la revendication 5, la première saillie d'installation (311) étant disposée en oblique.

7. Unité intérieure (100) selon l'une quelconque des revendications 1 à 6, comprenant en outre :
une seconde saillie d'installation (321) au niveau d'un côté de la première bague d'étanchéité (31) à proximité du panneau (12),
le panneau (12) définissant une seconde rainure (122) correspondant à la seconde saillie d'installation (321), pour recevoir la seconde saillie d'installation (321).

8. Unité intérieure (100) selon la revendication 7, la seconde saillie d'installation (321) étant disposée en oblique ; et
un côté de la deuxième bague d'étanchéité (32) à proximité du cadre frontal (11) définissant une rainure de limitation (322), le cadre frontal (11) comprenant une saillie de limitation (112) épousant de manière correspondante la rainure de limitation (322).

9. Unité intérieure (100) selon l'une quelconque des revendications 3 à 8,
une extrémité de la première bague d'étanchéité (31) éloignée de la troisième bague d'étanchéité (33) comprenant une partie de guidage (312), et
la partie de guidage (312) étant disposée en oblique vers l'ensemble d'air frais (2) dans une direction opposée à la troisième bague d'étanchéité (33).

10. Unité intérieure (100) selon l'une quelconque des revendications 3 à 9, l'ensemble d'air frais (2) comprenant :
un couvercle (22) ayant au moins une surface de paroi intérieure (221) inclinée dans une direction allant du cadre frontal (11) au panneau (12),
une distance étant augmentée entre l'au moins une surface de paroi intérieure (221) et une surface de paroi opposée à l'au moins une surface de paroi intérieure (221) dans une direction allant du cadre frontal (11) au panneau (12), et
la troisième bague d'étanchéité (33) étant disposée en oblique en correspondance avec une surface latérale (331) par rapport à l'au moins une surface de paroi intérieure (221), et la surface latérale (331) étant disposée en oblique dans une même direction que l'au moins une surface de paroi intérieure (221).

11. Unité intérieure (100) selon la revendication 10, le couvercle (22) comprenant un écran d'air frais.

12. Unité intérieure (100) selon l'une quelconque des revendications 1 à 11,
le composant de ventilation comprenant un couvercle (22), un passage d'air frais et un ventilateur dans le couvercle (22),
le passage d'air frais étant indépendant d'un passage d'air de l'unité intérieure (100) et comprenant une entrée d'air et une sortie d'air, l'entrée d'air étant en communication avec l'environnement extérieur et la sortie d'air étant en communication avec la seconde ouverture d'air frais (111).

13. Unité intérieure (100) selon l'une quelconque des revendications 1 à 12,
le panneau (12) comprenant :
un corps de panneau (123) ; et
une plaque de sortie d'air frais (124) reliée au corps de panneau (123) et disposée en correspondance avec l'ensemble d'air frais (2),
la plaque de sortie d'air frais (124) définissant la première ouverture d'air frais (121).

14. Unité intérieure (100) selon la revendication 13,
la plaque de sortie d'air frais (124) étant reliée amovible au corps de panneau (123) ; ou
la plaque de sortie d'air frais (124) étant montée rotative sur le corps de panneau (123).

15. Climatiseur, comprenant :
une unité intérieure (100) selon l'une quelconque des revendications 1 à 14,
une unité extérieure reliée à l'unité intérieure (100).
